# FASCICULE DE BREVET EUROPEEN

(11) **EP 1 553 368 B1**
(45) Date de publication et mention de la délivrance du brevet: **25.04.2007**
(21) Numéro de dépôt: 05290042.0
(22) Date de dépôt: 07.01.2005
(51) Int. Cl.: F26B 1/00, F26B 17/28, F26B 23/00

(54) **Installation pour le séchage de produits pâteux et applications**
Anlage zur Trocknung von pastösen Produkten und Verwendung derselben.
Plant for drying pasty products and uses thereof.

(30) Priorité: 08.01.2004 FR 0400113
(43) Date de publication de la demande: 13.07.2005
(73) Titulaire: S.C.P. Procalex, 98000 Monaco (MC); Groupe H. Labbe, 77220 Tournan en Brie (FR)
(72) Inventeur: Sanmori-Gwozdz, Eugène, Monaco 98000 (MC); Labbe, Henri Albert Marcel, 77220 Tournan en Brie (FR)
(74) Mandataire: Schrimpf, Robert

(56) Documents cités:
- DE-A- 2 752 363
- DE-A- 19 644 465
- DE-C- 45 080
- FR-A- 513 222
- FR-A- 699 883
- FR-A- 2 687 079
- FR-A- 2 712 076
- GB-A- 191 405 647
- US-A- 4 269 719

## Description

L'invention concerne une installation pour le séchage de produits pâteux, plus particulièrement de boues issues de l'épuration biologique.

Le séchage des boues humides issues de l'épuration biologique s'effectue couramment par leur mise en contact avec des parois chaudes.

Les boues humides, après déshydratation mécanique, contiennent un extrait sec compris entre 6 et 25% suivant leur origine. Si l'on envoyait ces boues directement, sans autre préparation, sur les parois chaudes, une phase « Visco-Plastique » se développerait lorsque l'extrait sec atteindrait 50% environ, et la boue devenue collante et plastique adhérerait aux parois chaudes ce qui diminuerait drastiquement le rendement du séchage et perturberait considérablement le fonctionnement de l'installation, notamment si la boue doit être déplacée dans des intervalles faibles entre les parois.

Pour éviter l'apparition de cette phase, il est connu de recycler une partie du produit séché, c'est-à-dire de prélever cette partie et de la transporter pour la mélanger à la boue humide en sorte que l'extrait sec de la boue humide ait une valeur supérieure à 50%. Ce procédé est bien connu dans l'industrie sous le nom de « BACK MIXING ».

Différents dispositifs ont été proposés pour mélanger de la matière séchée à la matière humide dans une installation de séchage.

La publication GB 5647 préconise de munir le séchoir de moyens pour mélanger automatiquement ou appliquer une quantité de matière séchée à la matière humide et de convoyer le mélange à l'autre extrémité de la machine, ou dans certains cas, de convoyer la matière séchée seulement et de réaliser le mélange durant le séchage.

Cette publication prévoit de placer le convoyeur dans la machine de séchage et de découvrir une portion de sa surface à l'extrémité de décharge de la machine pour que la quantité requise de matière séchée puisse y être jetée par des pâles tournant dans la machine, la matière séchante étant convoyée le long du convoyeur jusqu'à l'extrémité d'entrée de la machine où elle est passée à la matière humide entrante pour le mélange.

Cette publication prévoit que la matière humide soit alimentée dans le convoyeur à l'extrémité d'entrée de l'appareil et que la matière séchée soit appliquée juste après son entrée en sorte que le convoyeur agisse aussi comme mélangeur.

La seule réalisation effectivement décrite dans cette publication montre une vis de convoyage placée dans un carter sur le côté d'une chambre où tourne un cylindre chauffant muni de pâles, ce carter communiquant à ses extrémités avec la chambre par une ouverture d'entrée et par une ouverture de sortie et présentant une autre sortie munie d'un obturateur réglable pour évacuer du carter une partie du produit séché qui est entré dans le carter par son ouverture d'entrée, tandis que le produit humide tombe directement sur la vis dans le carter par une goulotte qui traverse la chambre.

La publication n'indique pas à quel type de matière humide cette réalisation est destinée mais manifestement il ne peut pas s'agir d'un produit susceptible de devenir collant et plastique car ce produit bloquerait très rapidement le fonctionnement de la vis.

Il ne serait pas non plus opportun de réaliser le mélange durant le séchage car il serait difficile de contrôler les conditions du mélange dans la longueur de l'appareil.

Il n'est pas non plus souhaitable d'utiliser la vis pour évacuer du carter une partie de la matière séchée avant son mélange avec de la matière humide car cela rend difficile le contrôle des conditions de mélange.

La publication DE 27 52 363 décrit très schématiquement un appareil de traitement thermique par le chaud ou par le froid qui présentent un ou plusieurs couples de rotors parallèles tournant en sens contraires dans une série de compartiments qui communiquent et qui comportent des chicanes, en sorte que la matière à traiter circule dans chaque compartiment avant de passer dans le compartiment suivant, jusqu'à être évacuée de l'appareil après traitement.

La publication US 4 269 719 décrit un sécheur de bouillie ouvert à l'air ambiant qui comporte deux arbres à disques parallèles tournant en sens contraires dans un bain de la bouillie à sécher en sorte qu'une portion de la boue adhère aux disques et soit séchée dans l'air, éventuellement chauffé. Les disques sont raclés et une vis sans fin est prévue sous les deux arbres pour évacuer la bouillie concentrée et les solides.

La publication DE 45080 décrit un séchoir qui comporte une chambre contenant un couple de rotors tournant en sens contraires et une vis de convoyage placée sous les rotors, la matière humide pénétrant dans la chambre au-dessus des rotors à une extrémité de la chambre pour être soumise à un courant d'air qui traverse la chambre et étant déplacée par les rotors vers l'autre extrémité de la chambre où se trouve une sortie tandis que la vis réalise un certain brassage sur toute la longueur de la chambre.

Tous ces dispositifs assurent un certain mélange du produit humide incident et du produit séché, mais dans des conditions très difficiles à contrôler et parfois en présence d'air extérieur. Aucun d'entre eux n'est adapté au séchage de boues issues de l'épuration biologique.

Dans l'industrie, le recyclage est pratiquement réalisé grâce à l'utilisation de plusieurs transporteurs à vis. La pluralité est imposée par le fait que la sortie et l'entrée du séchoir sont localisées dans des plans différents.

Les transporteurs remplissent également le rôle de séparation du produit fini et du produit recyclé.

Outre les inconvénients de gérer simultanément ces différentes fonctions, ces transporteurs sont la source d'entrée d'air parasite dans la chambre de séchage.

Il est à noter que le procédé connu mettant en oeuvre la « compression mécanique de la vapeur » est incompatible avec la présence d'air dans les buées. Celles-ci ne se condensent alors que partiellement.

La publication FR 2 712 076 décrit un séchoir de boues issues de l'épuration des eaux urbaines et industrielles qui comprend une chambre étanche à l'air, munie d'une entrée de boue humide et d'une sortie de produit séché, la chambre contenant une enfilade de disques creux chauffants fixes et des bras mélangeurs et racleurs montés sur un arbre pour tourner dans les intervalles entre les disques. Les disques sont chauffés de l'intérieur par circulation dans les disques d'un fluide caloporteur. Cette publication ne prévoit pas un recyclage du produit séché en vue de son mélange avec le produit humide incident.

Un but de l'invention est d'élever le degré de siccité du produit pâteux, notamment d'une boue issue de l'épuration biologique, tout en évitant des entrées d'air dans la chambre et en permettant un contrôle adéquat des conditions de recyclage.

On y parvient selon l'invention avec une installation pour sécher un produit pâteux, qui comprend une chambre allongée contenant des parois chaudes pour que le produit pâteux soit séché au contact des dites parois, et l'installation comportant des moyens de recyclage d'une partie du produit séché pour réaliser un mélange du produit séché et du produit humide incident, cette installation étant caractérisée en ce que la chambre est étanche à l'air et présente une entrée de produit pâteux et une sortie de produit séché, en ce que les parois chaudes sont constituées par des disques chauffants fixes disposés en enfilade dans la chambre entre ladite entrée et ladite sortie de la chambre, en ce que la chambre contient au moins un couple de rotors parallèles disposés côte à côte qui déterminent entre eux un espace, en ce que chaque rotor comprend un arbre qui porte des bras qui tournent entre les disques chauffants en les raclant, en ce qu'à ce couple de rotors est associée une vis sans fin située dans un carter qui est logé dans ledit espace et qui isole la vis du produit ambiant de la chambre, ce carter présentant une entrée de carter située sous une extrémité de l'enfilade des disques en amont de ladite sortie de la chambre et une sortie de carter disposée à l'autre extrémité de l'enfilade des disques pour évacuer dans la chambre, à proximité de ladite entrée de la chambre, le produit séché transporté par la vis.

C'est à la combinaison de ces caractéristiques que l'installation doit d'être performante pour le traitement des boues issues de l'épuration biologique.

Le réglage de la vitesse de la rotation de la vis permet de régler le débit et donc la proportion de produit séché qui est ainsi recyclée, le reste du produit séché étant extrait de la chambre par la sortie de produit séché, de façon en soi connue.

L'invention sera encore expliquée ci-après en référence aux figures du dessin joint sur lequel :
- la figure 1 est une coupe verticale du séchoir par un plan perpendiculaire aux axes de rotation des rotors et de la vis de recyclage ;
- la figures 2 est une coupe longitudinale du séchoir par un plan passant par l'axe de rotation de la vis de recyclage (plan A-A de la figure 1), et
- la figure 3 est une autre coupe longitudinale du séchoir par un plan passant par l'axe de rotation de l'un des rotors (plan B-B de la figure 1).

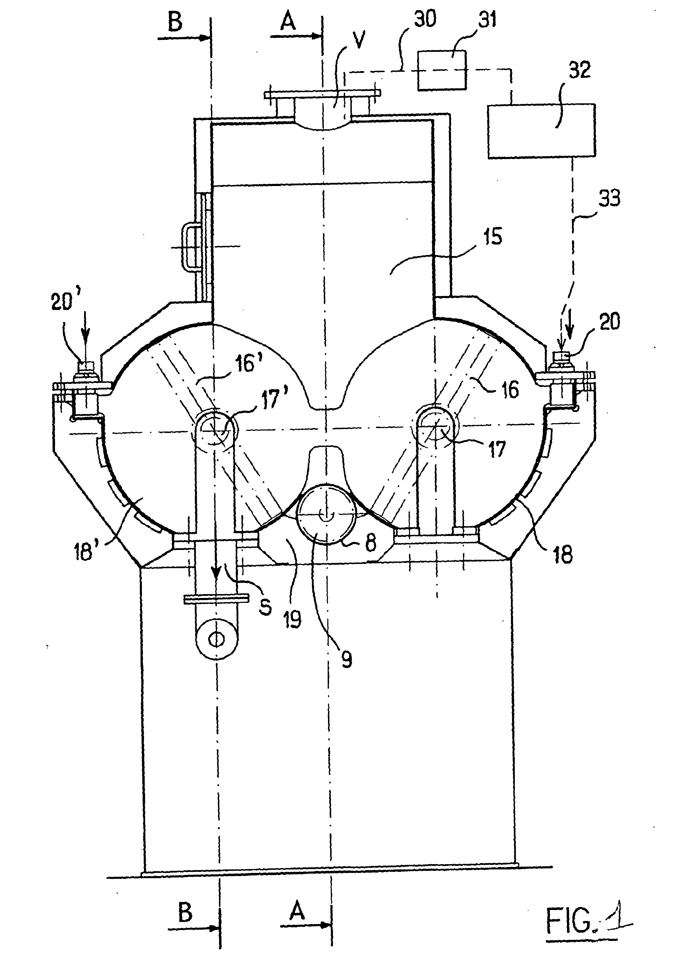

Selon l'invention, comme on le voit sur les figures 1 à 3, l'installation comprend une chambre (15) étanche à l'air qui contient un couple de rotors horizontaux parallèles et côte à côte, lesquels comprennent chacun une série de bras (16, 16') portés par des arbres horizontaux respectifs (17, 17') et tournant entre des disques chauffants fixes (18, 18') que les bras raclent en tournant. Les axes de rotation des rotors sont situés dans un même plan horizontal.

Ces deux rotors déterminent entre eux un espace (19) situé sous les arbres des rotors et où est logé un carter (8) qui contient une vis de recyclage horizontale (9) dont l'axe est situé dans le plan de symétrie des rotors.

La vitesse de rotation de la vis sans fin (9) est réglée par un moteur situé à l'extérieur de la chambre.

La chambre présente une entrée (E) pour la boue humide, une sortie (S) pour le produit séché et une sortie (V) pour la vapeur résultant du séchage.

On a également représenté les entrées (20, 20') qui servent à introduire dans les disques chauffants un fluide caloporteur.

Le carter de la vis présente une entrée (10) disposé de la vis sous une extrémité de l'enfilade des disques et une sortie (11) disposée à l'autre extrémité de cette enfilade.

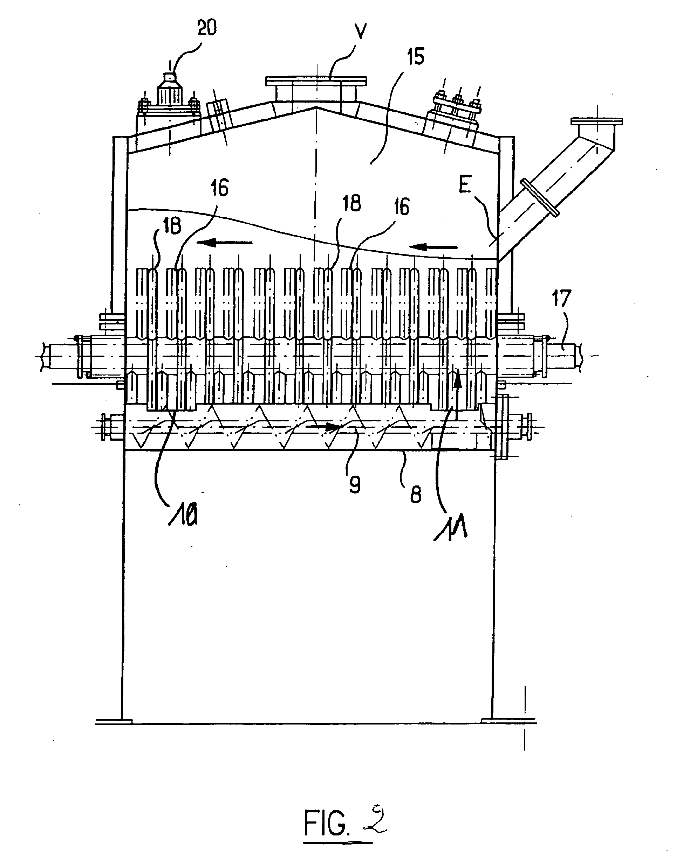

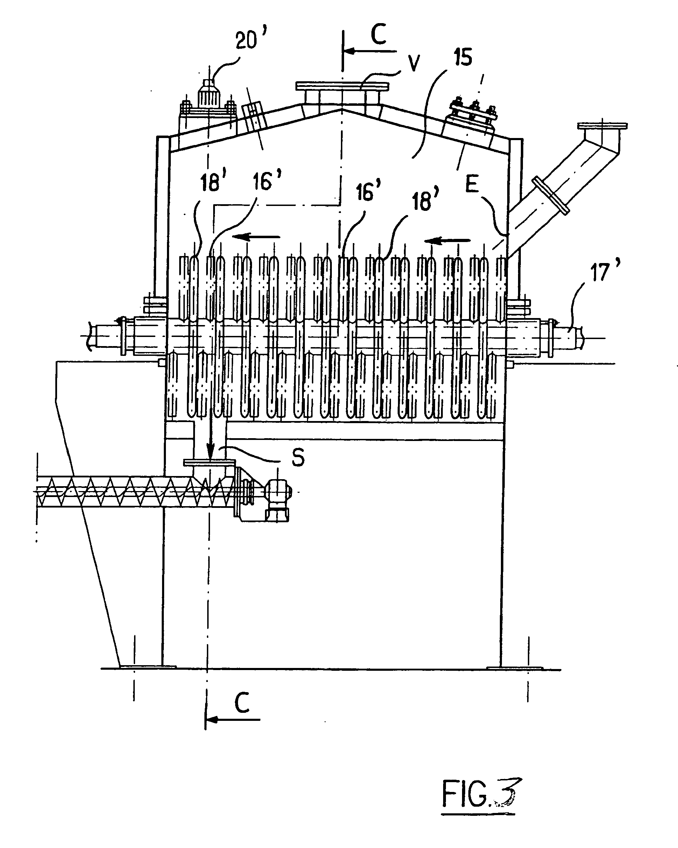

Les figures 2 et 3 sont des coupes schématiques du séchoir de la figure 1, respectivement par le plan A-A et par le plan B-B de la figure 2. La figure 1 est une coupe selon le plan C-C de la figure 3. On n'a pas représenté sur ces figures les moteurs d'entraînement respectifs des arbres (17, 17') des rotors et de la vis (9).

De préférence, les arbres (17, 17') tournent en sens inverse l'un de l'autre pour assurer un meilleur malaxage. La vis sans fin n'est destinée qu'à assurer le transport d'une partie du produit séché vers le produit humide incident.

On a schématisé sur la figure 1, un dispositif (en soi connu) de compression mécanique de la vapeur qui comprend des moyens pour extraire de la chambre la vapeur produite par le séchage, la comprimer et la renvoyer dans la chambre pour chauffer les parois chauffantes par exemple une communication (30) de la sortie de vapeur (V) avec un dépoussiéreur (31) suivi d'un compresseur (32) et une communication (33) du compresseur avec l'entrée (20) qui communique avec l'intérieur des disques chauffants.

L'invention n'est pas limitée à la réalisation qui a été décrite.

## Revendications

1. Installation pour sécher un produit pâteux, qui comprend une chambre allongée (15) contenant une entrée (E) de produit pâteux et une sortie (S) de produit séché, et des parois chaudes pour que le produit pâteux soit séché au contact des dites parois, lesquelles sont constituées par des disques chauffants fixes (18,18') disposés en enfilade dans la chambre (15) entre ladite entrée (E) et la dite sortie (S) de la chambre, ladite chambre (15) contenant un rotor constitué par un arbre (17,17') qui porte des bras (16,16') qui tournent entre les disques chauffants en les raclant, et l'installation comportant des moyens de recyclage d'une partie du produit séché pour réaliser un mélange du produit séché et du produit pâteux, **caractérisé en ce que** la chambre (15) est étanche à l'air et contient au moins un couple de rotors parallèles du type précité, disposés côté à côte et qui déterminent entre eux un espace (19), et **en ce qu'**à ce couple de rotors est associée une vis sans fin (9) située dans un carter (8) logé dans ledit espace (19) et qui isole la vis du produit ambiant de la chambre, ce carter (8) présentant une entrée de carter (10) située sous une extrémité de l'enfilade des disques en amont de ladite sortie (S) de la chambre pour recueillir une partie du produit séché et une sortie de carter (11) disposée à l'autre extrémité de l'enfilade des disques pour évacuer dans la chambre , à proximité de ladite entrée (E) de la chambre, le produit séché transporté par la vis sans fin (9).

2. Installation selon la revendication 1 qui comporte des moyens pour régler la vitesse de rotation de la vis sans fin afin de régler la fraction du produit séché qui est recyclée.

3. Installation selon la revendication 1 ou 2 dont les deux rotors (17, 16 ; 17', 16') tournent dans des sens inverses l'un de l'autre.

4. Installation selon l'une des revendications 1 à 3 dans laquelle les axes de rotation des deux rotors (17, 16 ; 17', 16') sont situés dans un même plan horizontal et dans laquelle la vis sans fin (9) tourne autour d'un axe horizontal situé dans le plan de symétrie des deux rotors, sous les axes des rotors.

5. Installation selon l'une des revendications 1 à 4 et qui comprend des moyens (30-33) pour extraire de la chambre la vapeur produite dans la chambre par le séchage du produit pâteux, la comprimer et la renvoyer dans la chambre pour chauffer lesdites parois.

6. Installation selon l'une des revendications 1 à 5 dans laquelle lesdites parois chaudes sont des parois creuses chauffées de l'intérieur par un fluide caloporteur.

7. Application d'une installation selon l'une des revendications 1 à 6 au séchage des boues humides, notamment de boues biologiques humides.

## Claims

1. Plant for drying a pasty product, which comprises an elongated chamber (15) containing a pasty product inlet (E) and a dried product outlet (S), and hot walls so that the pasty product is dried on contact with said walls, which walls consist of fixed heating discs (18, 18') arranged in a row in the chamber (15) between said inlet (E) and said outlet (S) of the chamber, said chamber (15) containing a rotor consisting of a shaft (17, 17') which bears arms (16, 16') which rotate between the heating discs while raking them, and the plant comprising means for recycling a part of the dried product so as to produce a mixture of the dried product and of the pasty product, **characterized in that** the chamber (15) is airtight and contains at least one pair of parallel rotors of the abovementioned type, arranged side by side and which determine between them a space (19), and **in that** this pair of rotors is associated with a worm screw (9) located in a housing (8) housed in said space (19) and which isolates the screw from the ambient product of the chamber, this housing (8) having a housing inlet (10) located under one end of the row of discs upstream of said outlet (S) of the chamber for collecting a part of the dried product, and a housing outlet (11) placed at the other end of the row of discs for evacuating into the chamber, in the vicinity of said inlet (E) of the chamber, the dried product transported by the worm screw (9).

2. Plant according to Claim 1, which comprises means for regulating the rotation speed of the worm screw in order to regulate the fraction of the dried product which is recycled.

3. Plant according to Claim 1 or 2, in which the two rotors (17, 16; 17', 16') rotate in opposite directions to one another.

4. Plant according to one of Claims 1 to 3, in which the axes of rotation of the two rotors (17, 16; 17', 16') are located in the same horizontal plane, and in which the worm screw (9) rotates around a horizontal axis located in the plane of symmetry of the two rotors, under the axes of the rotors.

5. Plant according to one of Claims 1 to 4, and which comprises means (30-33) for extracting from the chamber the vapour produced in the chamber by the drying of the pasty product, compressing it and returning it to the chamber for heating said walls.

6. Plant according to one of Claims 1 to 5, in which said hot walls are hollow walls heated from the inside by a heat-exchanging fluid.

7. Use of a plant according to one of Claims 1 to 6, for drying wet sludge, in particular wet biological sludge.

## Patentansprüche

1. Einrichtung zum Trocknen eines pastösen Produkts, welche eine längliche Kammer (15) umfasst, die einen Eingang (E) für das pastöse Produkt und einen Ausgang (S) für das getrocknete Produkt umfasst, und warme Wände, damit das pastöse Produkt beim Kontakt mit den Wänden getrocknet wird, die durch feste wärmende Scheiben (18,18') gebildet sind, die in Reihe in der Kammer (15) zwischen dem Eingang (E) und dem Ausgang (S) der Kammer angeordnet sind, wobei die Kammer (15) einen Rotor enthält, der durch eine Welle (17,17') gebildet ist, die Arme (16,16') trägt, die sich zwischen den wärmenden Scheiben drehen, während sie sie abschaben, und wobei die Einrichtung Mittel zum Wiederverwenden eines Teils des getrockneten Produkts umfasst, um eine Mischung des getrockneten und pastösen Produkts zu erzielen, **dadurch gekennzeichnet, dass** die Kammer (15) luftdicht ist und wenigstens ein Paar paralleler Rotoren des vorhin genannten Typs enthält, die nebeneinander angeordnet sind und die zwischen sich einen Raum (19) bestimmen, und **dadurch**, dass dieses Rotorpaar mit einer Schnecke (9) verbunden ist, die in einem Gehäuse (8) liegt, das in dem Raum (19) untergebracht ist und das die Schnecke vom umgebenden Produkt der Kammer isoliert, wobei dieses Gehäuse (8) einen Gehäuseeingang (10) aufweist, der unter einem Ende der Reihen der Scheiben dem Ausgang (S) der Kammer vorgelagert liegt, um einen Teil des getrockneten Produkts aufzunehmen, und einen Gehäuseausgang (11), der am anderen Ende der Reihe der Scheiben angeordnet ist, um in die Kammer, in der Nähe des Eingangs (E) der Kammer, das getrocknete, von der Schnecke (9) transportierte Produkt auszuscheiden.

2. Einrichtung gemäß Anspruch 1, welche Mittel zum Steuern der Rotationsgeschwindigkeit der Schnecke umfasst, um den Bruchteil des getrockneten Produkts zu steuern, der wieder verwendet wird.

3. Einrichtung gemäß Anspruch 1 oder 2, deren zwei Rotoren (17, 16; 17', 16') sich in zueinander entgegensetzten Richtungen drehen.

4. Einrichtung gemäß einem der Ansprüche 1 bis 3, bei welcher die Rotationsachsen der zwei Rotoren (17, 16; 17', 16') in einer selben horizontalen Ebene gelegen sind und in der sich die Schnecke (9) um eine horizontale Achse dreht, die in der Symmetrieebene der zwei Rotoren, unter den Achsen der Rotoren liegt.

5. Einrichtung gemäß einem der Ansprüche 1 bis 4 und welche Mittel (30-33) umfasst, um aus der Kammer den in der Kammer durch das Trocknen des pastösen Produkts erzeugten Dampf zu extrahieren, ihn zu komprimieren und ihn in die Kammer zurückzuschicken, um die Wände zu wärmen.

6. Einrichtung gemäß einem der Ansprüche 1 bis 5, bei welcher die warmen Wände hohle, durch ein wärmetragendes Fluid von innen erwärmte Wände sind.

7. Verwendung einer Einrichtung gemäß einem der Ansprüche 1 bis 6 zum Trocknen feuchter Schlämme, insbesondere feuchter biologischer Schlämme.
